# EUROPÄISCHE PATENTSCHRIFT

(11) **EP 3 330 740 B1**
(45) Veröffentlichungstag und Bekanntmachung des Hinweises auf die Patenterteilung: **08.09.2021**
(21) Anmeldenummer: 16201400.5
(22) Anmeldetag: 30.11.2016
(51) Int. Cl.: G01S 17/42

(54) **VERFAHREN ZUR ERFASSUNG VON OBJEKTEN IN EINEM ERFASSUNGSBEREICH**
METHOD FOR DETECTING OBJECTS IN A DETECTING RANGE
PROCÉDÉ DE DÉTECTION D'OBJETS DANS UNE ZONE DE DÉTECTION

(43) Veröffentlichungstag der Anmeldung: 06.06.2018
(73) Patentinhaber: Leuze electronic GmbH + Co KG, 73277 Owen/Teck (DE)
(72) Erfinder: Feller, Bernhard, 86316 Friedberg (DE); Eder, Alexander, 86928 Hofstetten (DE); Mohr, Stefan, 80686 München (DE); Rohbeck, Volker, 85244 Röhrmoos (DE)
(74) Vertreter: Ruckh, Rainer Gerhard

(56) Entgegenhaltungen:
- EP-A1- 2 315 052
- EP-A1- 2 339 376
- EP-A1- 2 722 687

## Beschreibung

Die Erfindung betrifft ein Verfahren und einen optischen Sensor zur Erfassung von Objekten in einem Erfassungsbereich.

Derartige optische Sensoren können insbesondere als Flächendistanzsensoren ausgebildet sein, die einen Distanzsensor mit einen Lichtstrahlen emittierenden Sender und einen Lichtstrahlen empfangenden Empfänger aufweisen. Beispielsweise mittels einer rotierenden Ablenkeinheit werden die Lichtstrahlen periodisch innerhalb des Erfassungsbereichs abgelenkt, so dass eine Positionsbestimmung von Objekten innerhalb des Erfassungsbereichs ermöglicht wird.

Diese optischen Sensoren wurden typischerweise im Bereich der Sicherheitstechnik zur Gefahrenbereichsüberwachung eingesetzt. Dabei wird in der Auswerteeinheit des optischen Sensors entsprechend der Größe des Gefahrenbereichs ein Schutzfeld definiert und abgespeichert. Die Überwachungsfunktion des optischen Sensors ist dann derart, dass mit diesem kontrolliert wird, ob ein gefahrbringendes, das heißt unzulässiges Objekt in das Schutzfeld eindringt. Ist dies der Fall, wird mit dem optischen Sensor ein Objektfeststellungssignal generiert, das zur Einleitung einer Sicherheitsmaßnahme verwendet werden kann.

Der optische Sensor kann beispielsweise an einer stationären Maschine wie zum Beispiel einer Presse angeordnet sein, die gefahrbringende Arbeitsvorgänge ausführt. Zum Schutz von Personen wird mit dem optischen Sensor ein Schutzfeld überwacht, das den Gefahrenbereich der Maschine abdeckt. Wird ein gefahrbringendes Objekt im Schutzfeld detektiert, wird durch die Generierung des Objektfeststellungssignals die Maschine aus Sicherheitsgründen abgeschaltet.

Der optische Sensor ist weiterhin an einer beweglichen Einheit wie einem Fahrzeug vorgesehen. Das Fahrzeug kann beispielsweise als fahrerloses Transportsystem ausgebildet sein. In dem Fall ist der optische Sensor an der Frontseite montiert, so dass mit dem Schutzfeld das Vorfeld des Fahrzeugs überwacht wird. Dringt ein Objekt in das Schutzfeld ein und wird dadurch ein Objektfeststellungssignal im optischen Sensor generiert, so wird dadurch als Sicherheitsmaßnahme das Fahrzeug abgebremst oder angehalten.

Problematisch ist insbesondere im letzteren Fall, dass eine Definition nur eines fest vorgegebenen Schutzfelds zur Erziehung einer vollständigen, dauerhaften Überwachungsfunktion nicht geeignet ist. Wenn beispielsweise das Fahrzeug in einer Kurve fährt, so dass eine an sich unkritische Umgebungskontur in das Schutzfeld ragt. Der optische Sensor löst dann durch die Generierung eines Objektfeststellungssignals einen Stillstand des Fahrzeugs aus, obwohl keine Gefährdungssituation vorliegt.

Die DE 10 2005 054 359 A1 betrifft eine Schutzeinrichtung für ein Fahrzeug mit einem an diesem angeordneten optischen Sensor zur Ortung von Objekten innerhalb eines Erfassungsbereichs, wobei in dem optischen Sensor wenigstens ein innerhalb des Erfassungsbereichs liegendes Schutzfeld vorgegeben ist, und wobei bei Detektion eines Objektes im Schutzfeld mittels des optischen Sensors von diesem ein Schaltsignal generiert wird. Durch Ortung von Objekten sind mittels des optischen Sensors zu vorgegebenen Zeitpunkten die Fahrtrichtung und/oder Geschwindigkeit des Fahrzeugs als Messgrößen bestimmbar. In Abhängigkeit dieser Messgrößen wird im optischen Sensor aus mehreren abgespeicherten Schutzfeldern ein Schutzfeld ausgewählt, innerhalb dessen die Objektdetektion erfolgt.

Durch diese Auswahl unterschiedlicher Schutzfelder kann die Gefahrenbereichsüberwachung an die vom Fahrzeug zurückgelegte Wegstrecke zwar zu einem gewissen Grad angepasst werden. Jedoch ist aufgrund der begrenzten Anzahl von Schutzfeldern die Anpassungsfähigkeit der Gefahrenbereichsüberwachung entsprechend begrenzt.

Die EP 2 315 052 A1 betrifft einen Sicherheitsscanner zur Absicherung eines Überwachungsbereichs, welcher einen Lichtsender zum Aussenden eines Lichtstrahls, eine Ablenkeinheit zur periodischen Ablenkung des Lichtstrahls in den Überwachungsbereich, einen Lichtempfänger zum Erzeugen von Empfangssignalen aus dem von Objekten in dem Überwachungsbereich remittierten Lichtstrahl sowie eine Auswertungseinheit aufweist, die dafür ausgebildet ist, anhand der Empfangssignale Eingriffe in ein Schutzfeld innerhalb des Überwachungsbereichs zu erkennen und daraufhin ein Absicherungssignal außer für den Fall bereitzustellen, dass der Eingriff einem erwarteten Gefährdungsobjekt zugeordnet werden kann. Dabei ist die Auswertungseinheit dafür ausgebildet, das Gefährdungsobjekt in dem Schutzfeld zu verfolgen und die Zuordnung von Eingriffen zu dem erwarteten Gefährdungsobjekt anhand der Kontur und der aktuellen Position, Orientierung und/oder Geschwindigkeit des Gefährdungsobjekts vorzunehmen.In der EP 2 339 376 A1 wird ein optoelektronischer Sensor, insbesondere ein Laserscanner, für ein Fahrzeug angegeben, das sich auf einer zu beiden Seiten begrenzten Fahrbahn bewegt, der einen Lichtempfänger zur Umwandlung von Empfangslicht in elektrische Signale sowie eine Auswertungseinheit aufweist, die dafür ausgebildet ist, aus den elektrischen Signalen die Position von Objekten in einem Überwachungsbereich des Sensors zu ermitteln und zu erkennen, ob sich ein unzulässiges Objekt innerhalb eines in Lage und/oder Ausdehnung dynamisch veränderlichen Schutzfeldes befindet. Dabei ist ein sicherer Ausgang vorgesehen, über den von der Auswertungseinheit bei Erkennung eines Schutzfeldeingriffs ein Halte- oder Bremssignal an das Fahrzeug ausgebbar ist. Die Auswertungseinheit ist weiterhin dafür ausgebildet, aus den elektrischen Signalen Begrenzungen der Fahrbahn zu erkennen und das Schutzfeld dynamisch in die Begrenzungen einzupassen.

Die EP 2 722 687 A1 betrifft eine Sicherheitsvorrichtung für ein Fahrzeug, insbesondere ein fahrerloses Fahrzeug, mit mindestens einem optoelektronischen Sensor zur Erfassung von Objekten in einem Überwachungsbereich, mit einer Schutzfeldbestimmungseinheit zur dynamischen Festlegung eines Schutzfeldes innerhalb des Überwachungsbereichs, mit einer Schutzfeldüberwachungseinheit zur Erkennung von unzulässigen Eingriffen in das Schutzfeld als Schutzfeldverletzung und mit einem Sicherheitsausgang zur Ausgabe eines Nothalt- oder Abbremssignals an eine Fahrzeugsteuerung des Fahrzeugs im Falle einer Schutzfeldverletzung. Dabei ist die Schutzfeldbestimmungseinheit dafür ausgebildet, das Schutzfeld anhand einer Nothalttrajektorie festzulegen.

Der Erfindung liegt die Aufgabe zugrunde, ein Verfahren und einen optischen Sensor bereitzustellen, mittels dessen eine flexible Anpassung einer Gefahrenbereichsüberwachung an sich verändernde Randbedingungen ermöglicht wird. Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zur Erfassung von Objekten in einem Erfassungsbereich und umfasst einen optischen Sensor mit einer Sensorsignale generierenden Sensoreinheit und eine Auswerteeinheit, in welcher die Sensorsignale ausgewertet werden. In der Auswerteeinheit ist ein innerhalb des Erfassungsbereichs liegendes, von einer Schutzfeldgrenze begrenztes rechteckiges Schutzfeld vorgegeben. In der Auswerteeinheit wird ein Objektfeststellungssignal generiert, wenn anhand der Sensorsignale ein Eindringen eines unzulässigen Objekts in das Schutzfeld registriert wird. Bei Erfassen des Eindringens einer zulässigen Objektstruktur wird über einen Teil der Schutzfeldgrenze in das Schutzfeld mittels der Sensoreinheit in der Auswerteeinheit dieser Teil der Schutzfeldgrenze durch die Kontur der zulässigen Objektstruktur ersetzt. Die verbleibende Schutzfeldgrenze wird nachgeführt und rechnerisch so geändert, dass ein neues Schutzfeld erhalten wird, das wieder rechteckig ist und den gesamten Verfahrweg überdeckt. Der optische Sensor ist an einer beweglichen Einheit vorgesehen. Die zulässigen Objektstrukturen sind von ortsfesten Umgebungskonturen gebildet.

Weiterhin betrifft die Erfindung einen optischen Sensor.

Mit dem optischen Sensor wird gemäß dem erfindungsgemäßen Verfahren eine Überwachungs- beziehungsweise Sicherheitsfunktion derart durchgeführt, dass mit diesem Objekteingriffe in ein definiertes Schutzfeld überwacht werden. Dabei erzeugt erfindungsgemäß der optische Sensor nur dann ein Objektfeststellungssignal, wenn ein unzulässiges Objekt, insbesondere ein gefahrbringendes Objekt, in das Schutzfeld eindringt. Abhängig vom Objektsfeststellungssignal kann dann insbesondere eine Sicherheitsmaßnahme ausgelöst werden.

Diese unzulässigen Objekte werden im optischen Sensor von zulässigen Objektstrukturen unterschieden, beispielsweise dadurch, dass vor Inbetriebnahme eine Anzahl von zulässigen Objektstrukturen in einem Einlernvorgang eingelernt und in der Auswerteeinheit des optischen Sensors abgespeichert wird.

Erfindungsgemäß führt ein Eindringen einer zulässigen Objektstruktur in das Schutzfeld nicht zur Generierung eines Objektfeststellungssignals, sondern vielmehr zu einer selbsttätigen Anpassung des Schutzfelds an diese zulässige Objektstruktur. Dabei wird der Teil der Schutzfeldgrenze, über welchen die zulässige Objektstruktur in das Schutzfeld eindringt, durch die Kontur der zulässigen Objektstruktur selbst ersetzt. Damit wird eine optimale Anpassung des Schutzfelds an die jeweilige Umgebung erhalten, da diese in Form der zulässigen Objektstruktur in das Schutzfeld miteinbezogen wird.

Durch die Einbeziehung von zulässigen Objektstrukturen in das Schutzfeld wird auf einfache Weise verhindert, dass eine solche zulässige Objektstruktur zur Generierung eines Objektfeststellungssignals führt, was ein unnötiges Einleiten einer Sicherheitsmaßnahme bedeuten würde. Da die zulässige Objektstruktur selbst in das Schutzfeld miteinbezogen wird, ist die Geometrie des Schutzfelds optimal derart an die zulässige Objektstruktur angepasst, dass der gesamte Raum zwischen der zulässigen Objektstruktur und dem optischen Sensor als Schutzfeld genutzt wird und damit für eine Objektüberwachung, das heißt auf eine Überwachung des Eindringens unzulässiger Objekte, genutzt werden kann.

Besonders vorteilhaft ist, dass zur Adaption an Umgebungsrandbedingungen in dem optischen Sensor nicht mehr eine Vielzahl von Schutzfeldern abgespeichert werden muss, die auf einer vorgegebenen Geometrie nicht exakt an diese Umgebungsrandbedingungen angepasst sein können. Mit dem erfindungsgemäßen Verfahren ist demgegenüber mit nur einem Schutzfeld durch dessen adaptive Änderung in Form der Einbeziehung von Konturen von zulässigen Objektstrukturen in die Schutzfeldgrenze eine exakte Anpassung an Umgebungsrandbedingungen möglich.

Erfindungsgemäß wird bei Eindringen der zulässigen Objektstruktur in das Schutzfeld nicht nur über einen Teil der Schuldfeldgrenze in das Schutzfeld dieser Teil der Schutzfeldgrenze durch die Kontur der zulässigen Objektstruktur ersetzt. Vielmehr erfolgt gleichzeitig eine Korrektur der restlichen Geometrie des Schutzfelds.

Erfindungsgemäß ist der optische Sensor an einer beweglichen Einheit vorgesehen, wobei die zulässigen Objektstrukturen von ortsfesten Umgebungskonturen gebildet sind.

Die bewegliche Einheit kann von einem Fahrzeug, wie zum Beispiel einem fahrerlosen Transportsystem oder Verschiebewagen gebildet sein.

Dabei kann durch Kenntnis der Umgebungsrandbedingungen von einer definierten Geometrie eines Schutzfelds ausgegangen werden kann. Wird dann an einem Rand des Schutzfelds durch den Eingriff der zulässigen Objektstruktur die Schutzfeldgrenze geändert, so kann zur Kompensation der gegenüberliegende Rand der Schutzfeldgrenze komplementär hierzu geändert werden, um so die Gesamtgeometrie des Schutzfelds zu erhalten.

Dabei ist insbesondere eine Geschwindigkeitskontrolle derart sinnvoll, um zu kontrollieren, ob sich das Fahrzeug einer Umgebungskontur wie einer Wand, die als zulässige Objektstruktur in das Schutzfeld miteinbezogen wird, zu schnell nähert. Ist dies der Fall, kann als Sicherheitsmaßnahme das Fahrzeug angehalten oder abgebremst werden.

Besonders vorteilhaft wird die Anpassung der Schutzfeldgrenze durch die Kontur der zulässigen Objektstruktur fortlaufend in Abhängigkeit deren Position zum optischen Sensor durchgeführt.

Damit werden die Größe und Form des Schutzfelds zeitabhängig an die zulässige Objektstruktur angepasst, so dass eine Anpassung des Schutzfelds an sich verändernde Umgebungsrandbedingungen gegeben ist.

Gemäß einer vorteilhaften Ausgestaltung wird durch eine zeitaufgelöste Distanzmessung gegen die zulässige Objektstruktur deren Geschwindigkeit relativ zum optischen Sensor bestimmt.

Dabei wird die ermittelte Geschwindigkeit in der Auswerteeinheit mit einem Grenzwert verglichen. Bei Überschreiten des Grenzwertes wird in der Auswerteeinheit eine Sicherheitsmaßnahme ausgelöst.

Damit wird eine weitere Sicherheitsfunktion realisiert. Bei einer schnellen Annäherung des optischen Sensors an eine zulässige Objektstruktur kann, obwohl die zulässige Objektstruktur selbst kein gefahrbringendes Objekt darstellt, dennoch eine Gefahr einer Kollision des optischen Sensors mit der zulässigen Objektstruktur bestehen, wenn sich der optische Sensor zu schnell an die zulässige Objektstruktur annähert. Durch Auslösen einer geeigneten Sicherheitsmaßnahme kann eine solche Gefahr unterbunden werden.

Gemäß einer vorteilhaften Ausführungsform ist der erfindungsgemäße optische Sensor ein Flächendistanzsensor, mittels dessen Objekte in einem flächigen Erfassungsbereich erfasst werden.

Dabei weist der Flächendistanzsensor einen Distanzsensor mit einem Lichtstrahlen emittierenden Sender und einem Lichtstrahlen empfangenden Empfänger auf.

Entsprechend dem vom Flächendistanzsensor erfassten flächigen Erfassungsbereich ist auch das Schutzfeld als Ausschnitt des Erfassungsbereichs ein flächiger Bereich. Je nach Applikation kann das Schutzfeld in einer horizontalen, vertikalen oder zur Horizontalen geneigten Ebene verlaufen.

Gemäß einer ersten Ausgestaltung weist der Flächendistanzsensor einen um eine Drehachse rotierenden Messkopf auf, in welchem der Distanzsensor mitrotierend angeordnet ist. Durch die Rotationsbewegung des Messkopfs sind die vom Sender des Distanzsensors emittierten Lichtstrahlen periodisch innerhalb des Erfassungsbereichs geführt.

Gemäß einer zweiten Ausgestaltung ist der Distanzsensor im Flächendistanzsensor stationär angeordnet. Dem Distanzsensor ist eine eine Ablenkbewegung ausführende Ablenkeinheit zugeordnet, wobei die vom Sender des Distanzsensors emittierten Lichtstrahlen mittels der Ablenkeinheit abgelenkt und dadurch periodisch innerhalb des Erfassungsbereichs geführt sind.

Prinzipiell könnte der optische Sensor auch von einem Kamerasystem gebildet sein, wobei in diesem Fall sogar dreidimensionale Schutzfelder definiert werden können.

Gemäß einer vorteilhaften Ausführungsform ist der optische Sensor als Sicherheitssensor ausgebildet, so dass dieser im Bereich der Sicherheitstechnik einsetzbar ist. Hierzu weist der optische Sensor einen fehlersicheren Aufbau auf, was insbesondere durch eine redundant aufgebaute Auswerteeinheit realisiert wird. Eine redundante Auswerteeinheit kann beispielsweise durch zwei sich zyklisch gegenseitig überwachende Rechnereinheiten gebildet sein.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Zweites Ausführungsbeispiel des erfindungsgemäßen optischen Sensors.
- Figur 3a, b:: Erstes nicht-erfindungsgemäßes Ausführungsbeispiel für eine Schutzfeldüberwachung mit dem erfindungsgemäßen optischen Sensor.
- Figur 4a, b:: Zweites nicht-erfindungsgemäßes Ausführungsbeispiel für eine Schutzfeldüberwachung mit dem erfindungsgemäßen optischen Sensor.
- Figur 5a, b:: Erfindungsgemäßes Ausführungsbeispiel für eine Schutzfeldüberwachung mit dem erfindungsgemäßen optischen Sensor.

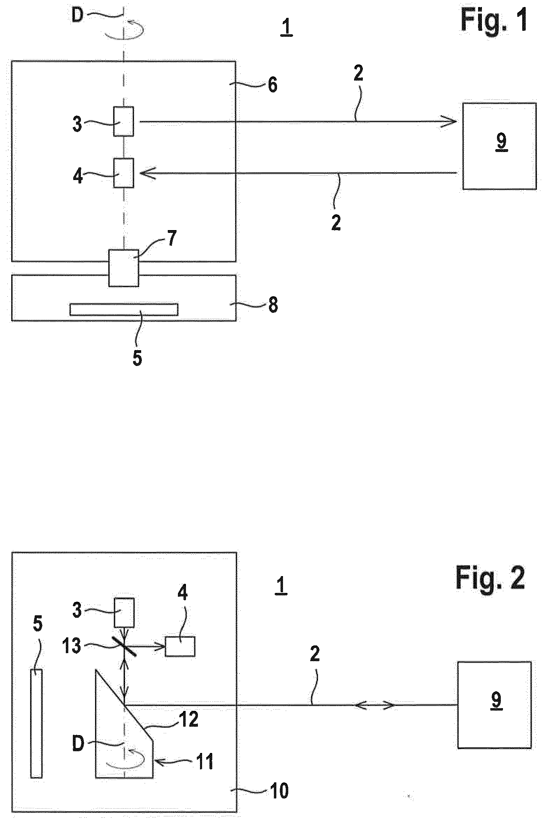

Figur 1 zeigt ein erstes Ausführungsbeispiel des erfindungsgemäßen optischen Sensors 1. Der optische Sensor 1 ist als Flächendistanzsensor ausgebildet, wobei dieser als Sensoreinheit einen Distanzsensor mit einem Lichtstrahlen 2 emittierenden Sender 3 und einen Lichtstrahlen 2 empfangenden Empfänger 4 aufweist. Der Sender 3 ist in Form einer Laserdiode ausgebildet. Mit dem Distanzsensor erfolgt eine Distanzmessung vorzugsweise nach einem Impuls-Laufzeitverfahren oder nach einem Phasenmessverfahren. Im ersten Fall emittiert der Sender 3 Lichtstrahlen 2 in Form von Lichtpulsen. Im zweiten Fall emittiert der Sender 3 Lichtstrahlen 2, welchen eine Modulation aufgeprägt ist.

Die Auswertung der Sensorsignale des Distanzsensors wird in einer Auswerteeinheit 5 ausgewertet. Für den Fall, dass der optische Sensor 1 als Sicherheitssensor ausgebildet ist, weist die Auswerteeinheit 5 einen redundanten Aufbau auf, beispielsweise in Form zweier sich gegenseitig zyklisch überwachender Rechnereinheiten.

Die Lichtstrahlen 2 des Senders 3 werden periodisch in einen flächigen Erfassungsbereich geführt. Hierzu sind im vorliegenden Fall der Sender 3 und der Empfänger 4 in einem rotierenden Messkopf 6 untergebracht, dessen Seitenwand ein Austrittsfenster für die Lichtstrahlen 2 aufweist. Der Messkopf 6 ist mit einer Drehlagerung 7 auf einem stationären Sockel 8 gelagert. Durch einen nicht dargestellten Antrieb wird der Messkopf 6 um eine mit der Symmetrieachse des Messkopfs 6 zusammenfallenden Drehachse D gedreht. Durch diese Drehbewegung überstreichen die Lichtstrahlen 2 periodisch eine senkrecht zur Drehachse D orientierte Ebene, die den Erfassungsbereich bildet. Je nach Ausführung des optischen Sensors 1 kann der Erfassungsbereich auch nur einen Teilbereich einer Vollumdrehung von 360° umfassen. Der Sender 3 und der Empfänger 4 sind über gegebenenfalls berührungslos arbeitende Zuleitungsmittel in der Drehlagerung 7 an die Auswerteeinheit 5 angeschlossen.

Zur Detektion eines Objekts 9 wird die Laufzeit der Lichtstrahlen 2 des Senders 3 zum Objekt 9 ermittelt, woraus die Objektdistanz ermittelt wird. Zusätzlich wird die aktuelle Drehstellung des Messkopfs 6 erfasst. Damit kann die Position des Objekts 9 innerhalb des Erfassungsbereichs bestimmt werden.

Figur 2 zeigt eine zweite Ausführungsform des erfindungsgemäßen optischen Sensors 1. Der optische Sensor 1 ist wiederrum als Flächendistanzsensor ausgebildet, der entsprechend zur Ausführungsform gemäß Figur 1 einen Distanzsensor mit einem Sender 3 und Empfänger 4 sowie eine Auswerteeinheit 5 aufweist.

Der optische Sensor 1 gemäß Figur 2 unterscheidet sich vom optischen Sensor 1 gemäß Figur 1 nur hinsichtlich der Strahlablenkung der Lichtstrahlen 2. Bei der Ausführungsform der Figur 2 sind der Sender 3 und der Empfänger 4 wie auch die Auswerteeinheit 5 in einem Gehäuse 10 stationär angeordnet, wobei in der Seitenwand des Gehäuses ein nicht gesondert dargestelltes Austrittsfenster vorgesehen ist, durch welches die Lichtstrahlen 2 geführt sind.

Zur Strahlablenkung der Lichtstrahlen 2 ist im Gehäuse 10 eine motorisch getriebene Ablenkeinheit 11 vorgesehen, die einen Umlenkspiegel 12 aufweist, der um eine senkrecht verlaufende Drehachse D drehbar ist. Damit werden die vom Sender 3 emittierten Lichtstrahlen 2 in einer den Erfassungsbereich bildenden, senkrecht zur Drehachse D verlaufenden Ebene abgelenkt. Die vom Objekt 9 zurückreflektierten Lichtstrahlen 2 verlaufen koaxial zu den von Sendern 3 emittierten Lichtstrahlen 2. Der koaxiale Strahlverlauf wird mittels eines Strahlteilerspiegels 13 erzielt. Je nach Größe des Austrittsfensters kann der Erfassungsbereich auf einen Winkelbereich kleiner als 360° begrenzt werden.

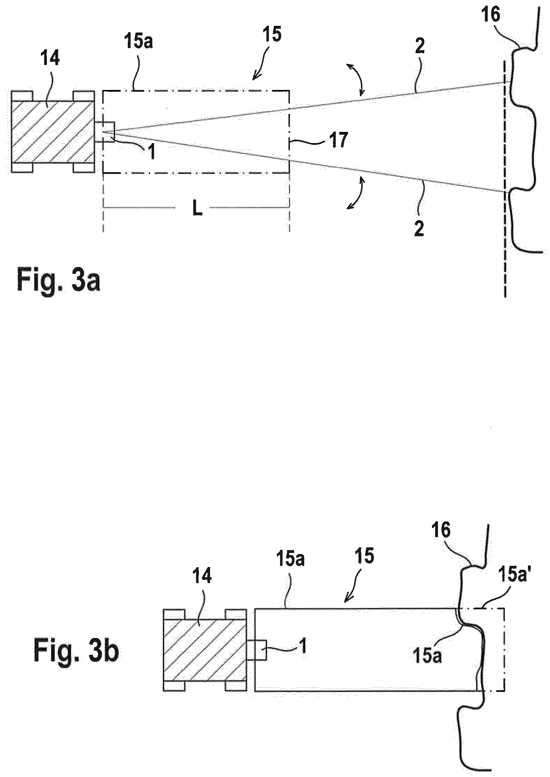

Die Figuren 3a, 3b zeigen ein erstes Beispiel des nichterfindungsgemäßen Verfahrens, das mit dem optischen Sensor 1 gemäß Figur 1 oder Figur 2 durchgeführt wird.

In diesem Fall ist der optische Sensor 1 an der Frontseite eines Fahrzeugs angeordnet, das im vorliegenden Fall von einem Verschiebewagen 14 gebildet ist, der entlang einer definierten Bahn verfahren wird.

In der Auswerteeinheit 5 des optischen Sensors 1 ist ein

Schutzfeld 15 als Teilausschnitt des Erfassungsbereichs vorgegeben. Im vorliegenden Fall wird ein rechteckiges Schutzfeld 15 vorgegeben. Die Schutzfeldgrenze 15a des Schutzfelds 15 wird so vorgegeben, dass mit dieser das gesamte Vorfeld des Verschiebewagens 14 überwacht wird. Die Überwachungsfunktion des optischen Sensors 1 erfolgt derart, dass mit diesem dann ein Objektfeststellungssignal generiert wird, wenn ein unzulässiges Objekt, zum Beispiel eine Person in das Schutzfeld 15 eindringt. Durch die Generierung des Objektfeststellungssignals wird eine Sicherheitsmaßnahme ausgelöst, zum Beispiel der Verschiebewagen 14 angehalten, damit keine Gefährdung für Personen entsteht.

Die Größe des Sicherheitsfelds 15, insbesondere die Länge L des Schutzfelds 15 kann abhängig von der Fahrzeuggeschwindigkeit, die mit einer geeigneter Sensorik erfasst wird, variiert werden. Dabei kann das Schutzfeld 15 umso größer gewählt werden, je kleiner die Geschwindigkeit ist.

Wie die Figuren 3a, 3b zeigen, bewegt sich der Verschiebewagen 14 auf eine Umgebungskontur 16 zu, die von der Oberfläche einer Gebäudewand oder einer Anlage 17 gebildet sein kann.

Diese Umgebungskontur 16 stellt im Gegensatz zu einer Person kein Gefahrenpotential dar. Daher wird die Umgebungskontur 16 in einem Einlernvorgang vor Beginn des Überwachungsbetriebs mit dem optischen Sensor 1 eingelernt und in der Auswerteeinheit 5 des optischen Sensors 1 abgespeichert.

Solange der Verschiebewagen 14 weit entfernt ist, liegt die Umgebungskontur 16 außerhalb des Schutzfelds 15 (Figur 3a). Solange dies der Fall ist, behält das Schutzfeld 15 die ursprünglich vorgegebene rechteckige Kontur. Der Erfassungsbereich des optischen Sensors 1 ist so groß, dass die Umgebungskontur 16 außerhalb des Schutzfelds 15 mit dem optischen Sensor 1 bereits erfasst wird, jedoch als außerhalb des Schutzfelds 15 liegend erkannt wird.

Figur 3b zeigt den Fall, dass sich der Verschiebewagen 14 soweit an die Umgebungskontur 16 angenähert hat, dass die Umgebungskontur 16 über einen Teil der Schutzfeldgrenze (in Figur 3b mit 15a' bezeichnet) in die Schutzfeldgrenze 15a ragt und diesen verdeckt.

Da die Umgebungskontur 16 im optischen Sensor 1 als zulässige Objektstruktur abgespeichert ist, wird diese als nicht gefahrbringendes Objekt 9 im optischen Sensor 1 klassifiziert, so dass bei Eindringen der Umgebungskontur 16 in das Schutzfeld 15 kein Objektfeststellungssignal generiert wird.

Anstelle dessen wird die Umgebungskontur 16 als zulässige Objektstruktur in das Schutzfeld 15 miteinbezogen. Wie Figur 3b zeigt, wird der von der Umgebungskontur 16 verdeckte Teil der Schutzfeldgrenze 15a' durch die Umgebungskontur 16 als neuem Teil der Schutzfeldgrenze 15a ersetzt, der nahtlos an den restlichen Teil der Schutzfeldgrenze 15a anschließt.

Durch das so bestimmte neue Schutzfeld 15 ist somit die Umgebungskontur 16 von der Schutzfeld-Überwachung ausgenommen, wobei jedoch das Schutzfeld 15 bis unmittelbar an diese Umgebungskontur 16 heranreicht, so dass der Zwischenraum zwischen der Frontseite des Verschiebewagens 14 und der Umgebungskontur 16 lückenlos mit dem Schutzfeld 15 erfasst wird.

Die Umgebungskontur 16 wird vom optischen Sensor 1 fortlaufend erfasst. Bei fortschreitender Annäherung des Verschiebewagens 14 an die Umgebungskontur 16 ändert sich in entsprechender Weise die Schutzfeldgrenze 15a fortlaufend.

Vorzugsweise wird durch die fortlaufende Detektion der Umgebungskontur 16 mit dem optischen Sensor 1 die Geschwindigkeit erfasst, mit dem sich der optische Sensor 1 und damit auch der Verschiebewagen 14 der Umgebungskontur 16 nähert. Diese aktuelle Geschwindigkeit wird mit einem Grenzwert verglichen. Überschreitet die aktuelle Geschwindigkeit den Grenzwert, wird eine Sicherheitsmaßnahme ausgelöst, beispielsweise der Verschiebewagen 14 abgebremst.

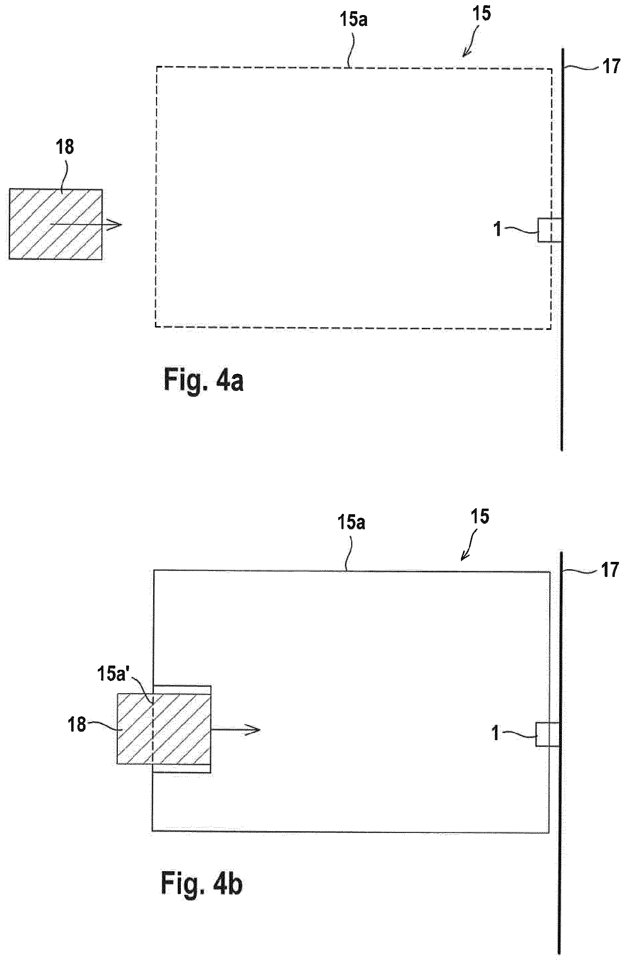

Die Figuren 4a, 4b zeigen ein zweites Bespiel des nichterfindungsgemäßen Verfahrens, das mit dem optischen Sensor 1 gemäß Figur 1 oder 2 durchgeführt wird.

In diesem Fall ist der optische Sensor 1 stationär an einer Anlage 17, insbesondere einer Maschine, angeordnet. Mit dem optischen Sensor 1 wird das Vorfeld der Anlage 17 überwacht, wobei hierzu, wie im Ausführungsbeispiel gemäß den Figuren 3a, 3b, ein rechteckiges Schutzfeld 15 vorgegeben wird. Die Auswertung der Signale des optischen Sensors 1 erfolgt analog zur Ausführungsform der Figuren 3a, 3b. Insbesondere wird ein Objektfeststellungssignal generiert, wenn ein unzulässiges Objekt in das Schutzfeld 15 eindringt. Die Generierung des Objektfeststellungssignals führt zum Abschalten der Anlage 17.

Als zulässige Objektstruktur ist im vorliegenden Fall ein Transportgut 18 vorgesehen, das mit einem Transportmittel der Anlage 17 zugeführt werden kann. Das Transportgut 18 weist eine definierte Kontur auf, die in einem Einlernvorgang als zulässige Objektstruktur in dem optischen Sensor 1 eingelernt wird.

Analog zum Ausführungsbeispiel gemäß den Figuren 3a, 3b wird bei Eindringen des Transportguts 18 in das Schutzfeld 15 der vom Transportgut 18 verdeckte Teil der Schutzfeldgrenze 15a' durch die zulässige Objektstruktur ersetzt, so dass wieder die Kontur der zulässigen Objektstruktur einen Teil der Schutzfeldgrenze 15a' des Schutzfelds 15 bildet. Auch hier bleibt der von der zulässigen Objektstruktur unberührte Teil der Schutzfeldgrenze15a unverändert.

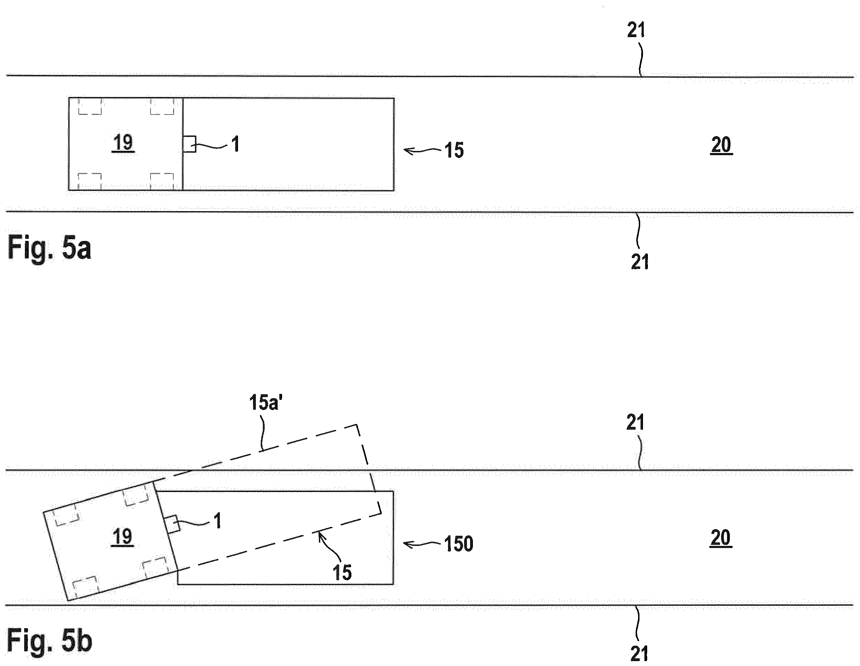

Die Figuren 5a, 5b zeigen eine erfindungsgemäße Variante des Ausführungsbeispiels gemäß den Figuren 3a, 3b. Bei der Ausführungsform der Figuren 5a, 5b wird ein Fahrzeug in Form eines fahrerlosen Transportsystems 19 entlang eines vorgegebenen Verfahrwegs 20 bewegt. Der Verfahrweg 20 ist an seinen seitlichen Rändern durch geradlinig verlaufende Wandelemente 21 begrenzt.

Mit dem optischen Sensor 1 wird wieder das Vorfeld des Fahrzeugs überwacht, indem ein rechteckiges Schutzfeld 15 vorgegeben wird, das an die Fahrzeugbreite und die Breite des Verfahrwegs 20 angepasst ist.

Die Signalauswertung, insbesondere zur Generierung von Objektfeststellungssignalen, erfolgt analog zum Ausführungsbeispiel gemäß den Figuren 3a, 3b. Bei dem Ausführungsbeispiel der Figuren 5a, 5b werden die Wandelemente 21 als zulässige Objektstrukturen im optischen Sensor 1 eingelernt.

Figur 5a zeigt den störungsfreien Fall einer exakten Geradeausfahrt des fahrerlosen Transportsystems 19 im Verfahrweg 20. In diesem Fall liegt das rechteckige Schutzfeld 15 in Abstand zu den Wandelementen 21.

Figur 5b zeigt den Fall, dass das fahrerlose Transportsystem 19 im Verfahrweg 20 schlingert. Dadurch steht das fahrerlose Transportsystem 19 etwas schief im Verfahrweg 20. Dementsprechend ragt ein Wandelement 21 in das Schutzfeld 15 (in Figur 5b mit 15' bezeichnet), da dieses wie das fahrerlose Transportsystem 19 schräg zum Verfahrweg 20 orientiert ist.

Entsprechend dem Verfahren, das in den vorigen nicht-erfindungsgemäßen Ausführungsbeispielen erläutert wurde, wird das in das Schutzfeld 15 ragende Wandelement 21 als zulässige Objektstruktur erkannt, so dass die Kontur dieses Wandelements 21 als neue Schutzfeldgrenze 15a übernommen wird und die alte Schutzfeldgrenze 15a' ersetzt wird.

Da mit dem geänderten Schutzfeld 15 wieder der gesamte Verfahrweg 20 überwacht werden soll, werden in diesem Fall die verbleibenden Teile der Schutzfeldgrenze 15a nachgeführt und rechnerisch so geändert, dass ein neues Schutzfeld 150 erhalten wird, das wieder rechteckig ist und den gesamten Verfahrweg 20 überdeckt.

Mit dieser Nachführung der Schutzfeld-Geometrie können somit Schlingerbewegungen des fahrerlosen Transportsystems 19 so kompensiert werden, dass sie keine Auswirkung auf die Schutzfeldüberwachung haben.

### Bezugszeichenliste

- (1): Optischer Sensor
- (2): Lichtstrahlen
- (3): Sender
- (4): Empfänger
- (5): Auswerteeinheit
- (6): Messkopf
- (7): Drehlagerung
- (8): Sockel
- (9): Objekt
- (10): Gehäuse
- (11): Ablenkeinheit
- (12): Umlenkspiegel
- (13): Strahlteilerspiegel
- (14): Verschiebewagen
- (15): Schutzfeld
- (15a): Schutzfeldgrenze
- (15a'): Schutzfeldgrenze
- (16): Umgebungskontur
- (17): Anlage
- (18): Transportgut
- (19): Fahrerloses Transportsystem
- (20): Verfahrweg
- (21): Wandelement
- (150): Schutzfeld
- (D): Drehachse
- (L): Lange

## Patentansprüche

1. Verfahren zur Erfassung von Objekten (9) in einem Erfassungsbereich mittels eines optischen Sensors (1) mit einer Sensorsignale generierenden Sensoreinheit und mit einer Auswerteeinheit (5), in welcher die Sensorsignale ausgewertet werden, wobei in der Auswerteeinheit (5) ein innerhalb des Erfassungsbereichs liegendes, von einer Schutzfeldgrenze (15a) begrenztes rechteckiges Schutzfeld (15) vorgegeben ist, und wobei in der Auswerteeinheit (5) ein Objektfeststellungssignal generiert wird, wenn anhand der Sensorsignale ein Eindringen eines unzulässigen Objekts in das Schutzfeld (15) registriert wird, **dadurch gekennzeichnet, dass** bei Erfassen des Eindringens einer zulässigen Objektstruktur über einen Teil der Schutzfeldgrenze (15a) in das Schutzfeld (15) mittels der Sensoreinheit in der Auswerteeinheit (5) dieser Teil der Schutzfeldgrenze (15a) durch die Kontur der zulässigen Objektstruktur ersetzt wird und gleichzeitig die verbleibende Schutzfeldgrenze nachgeführt und rechnerisch so geändert wird, dass ein neues Schutzfeld (150) erhalten wird, das wieder rechteckig ist und einen gesamten Verfahrweg (20) einer beweglichen Einheit überdeckt, und dass der optische Sensor an der beweglichen Einheit vorgesehen ist, und dass die zulässigen Objektstrukturen von ortsfesten Umgebungskonturen gebildet sind.

2. Verfahren nach Anspruch 1, **dadurch gekennzeichnet, dass** die Anpassung der Schutzfeldgrenze (15a) durch die Kontur der zulässigen Objektstruktur fortlaufend in Abhängigkeit deren Position zum optischen Sensor (1) durchgeführt wird.

3. Verfahren nach einem der Ansprüche 1 oder 2, **dadurch gekennzeichnet, dass** durch eine zeitaufgelöste Distanzmessung gegen die zulässige Objektstruktur deren Geschwindigkeit relativ zum optischen Sensor (1) bestimmt wird.

4. Verfahren nach Anspruch 3, **dadurch gekennzeichnet, dass** die ermittelte Geschwindigkeit in der Auswerteeinheit (5) mit einem Grenzwert verglichen wird, und dass bei Überschreiten des Grenzwertes in der Auswerteeinheit (5) eine Sicherheitsmaßnahme ausgelöst wird.

5. Verfahren nach einem der Ansprüche 1 bis 4, **dadurch gekennzeichnet, dass** die oder jede zulässige Objektstruktur in einem Einlernvorgang eingelernt wird.

6. Optischer Sensor zur Erfassung von Objekten (9) in einem Erfassungsbereich, mit einer Sensorsignale generierenden Sensoreinheit und mit einer Auswerteeinheit (5) zur Auswertung der Sensorsignale, wobei in der Auswerteeinheit (5) ein innerhalb des Erfassungsbereichs liegendes, von einer Schutzfeldgrenze (15a) begrenztes rechteckiges Schutzfeld (15) vorgegeben ist, und wobei in der Auswerteeinheit (5) ein Objektfeststellungssignal generiert ist, wenn anhand der Sensorsignale ein Eindringen eines unzulässigen Objekts in das Schutzfeld (15) registriert ist, **dadurch gekennzeichnet, dass** bei Erfassen des Eindringens einer zulässigen Objektstruktur über einen Teil der Schutzfeldgrenze (15a) in das Schutzfeld (15) mittels der Sensoreinheit in der Auswerteeinheit (5) dieser Teil der Schutzfeldgrenze (15a) durch die Kontur der zulässigen Objektstruktur ersetzt wird und gleichzeitig die verbleibende Schutzfeldgrenze nachgeführt und rechnerisch so geändert wird, dass ein neues Schutzfeld (150) erhalten wird, das wieder rechteckig ist und einen gesamten Verfahrweg (20) einer beweglichen Einheit überdeckt, und dass der optische Sensor an der beweglichen Einheit vorgesehen ist, und dass die zulässigen Objektstrukturen von ortfesten Umgebungskonturen gebildet sind.

7. Optischer Sensor nach Anspruch 6, **dadurch gekennzeichnet, dass** dieser ein Flächendistanzsensor ist, mittels dessen Objekte (9) in einem flächigen Erfassungsbereich erfasst werden.

8. Optischer Sensor nach Anspruch 7, **dadurch gekennzeichnet, dass** der Flächendistanzsensor einen Distanzsensor mit einem Lichtstrahlen (2) emittierenden Sender (3) und einem Lichtstrahlen (2) empfangenden Empfänger (4) aufweist.

9. Optischer Sensor nach einem der Ansprüche 7 oder 8, **dadurch gekennzeichnet, dass** der Flächendistanzsensor einen um eine Drehachse (D) rotierenden Messkopf (6) aufweist, in welchem der Distanzsensor mitrotierend angeordnet ist, so dass durch die Rotationsbewegung des Messkopfs (6) die vom Sender (3) des Distanzsensors emittierten Lichtstrahlen (2) periodisch innerhalb des Erfassungsbereichs geführt sind.

10. Optischer Sensor nach einem der Ansprüche 7 oder 8, **dadurch gekennzeichnet, dass** der Distanzsensor im Flächendistanzsensor stationär angeordnet ist, und dass dem Distanzsensor eine eine Ablenkbewegung ausführende Ablenkeinheit (11) zugeordnet ist, wobei die vom Sender (3) des Distanzsensors emittierten Lichtstrahlen (2) mittels der Ablenkeinheit (11) abgelenkt und dadurch periodisch innerhalb des Erfassungsbereichs geführt sind.

11. Optischer Sensor nach einem der Ansprüche 6 bis 10, **dadurch gekennzeichnet, dass** dieser ein Sicherheitssensor ist.

## Claims

1. A method for detecting objects (9) in a detecting range by means of an optical sensor (1) with a sensor unit generating sensor signals and with an expansion unit (5) in which the sensor signals are evaluated, wherein a rectangular protective field (15) located within the detection area is predetermined in the evaluation unit (5), a rectangular protective field (15) bounded by a protective field boundary (15a) is predefined in the evaluation unit (5), and an object detection signal being generated in the evaluation unit (5) if an intrusion of an impermissible object into the protective field (15) is registered on the basis of the sensor signals, **characterised in that**, if the intrusion of an impermissible object into the protective field (15) is detected, the object detection signal is generated in the evaluation unit (5), **in that**, when the penetration of a permissible object structure via a part of the protective field boundary (15a) into the protective field (15) is detected by means of the sensor unit in the evaluation unit (5), this part of the protective field boundary (15a) is replaced by the contour of the permissible object structure and, at the same time, the remaining protective field boundary is tracked and changed by calculation in this way, **in that** a new protective field (150) is obtained which is again rectangular and covers an entire travel path (20) of a movable unit, and **in that** the optical sensor is provided on the movable unit, and **in that** the permissible object structures are formed by stationary environment contours.

2. A method according to claim 1, **characterised in that** the adaptation of the protective field boundary (15a) by the contour of the permissible object structure is carried out continuously as a function of its position relative to the optical sensor (1).

3. A method according to one of claims 1 or 2, **characterised in that** the speed of the object relative to the optical sensor (1) is determined by a time-resolved distance measurement against the permissible object structure.

4. A method according to claim 3, **characterised in that** the determined speed is compared with a limit value in the evaluation unit (5), and **in that** a safety measure is triggered if the limit value is exceeded in the evaluation unit (5).

5. A method according to any one of claims 1 to 4, **characterised in that** the or each permissible object structure is taught in a teach-in process.

6. An optical sensor for detecting objects (9) in a detecting range, having a sensor unit generating sensor signals and having an evaluation unit (5) for evaluating the sensor signals, a rectangular protective field (15) which is located within the detection area and is bounded by a protective field boundary (15a) being predefined in the evaluation unit (5), and an object detection signal being generated in the evaluation unit (5) if penetration of an impermissible object into the protective field (15) is registered with the aid of the sensor signals, **characterised in that**, when the penetration of a permissible object structure over a part of the protective field boundary (15a) into the protective field (15) is detected by means of the sensor unit in the evaluation unit (5), this part of the protective field boundary (15a) is replaced by the contour of the permissible object structure and, at the same time, the remaining protective field boundary is tracked and changed by calculation in this way, **in that** a new protective field (150) is obtained which is again rectangular and covers an entire travel path (20) of a movable unit, and **in that** the optical sensor is provided on the movable unit, and **in that** the permissible object structures are formed by stationary ambient contours.

7. An optical sensor according to claim 6, **characterised in that** this is an area distance sensor by means of which objects (9) are detected in a flat detection area.

8. An optical sensor according to claim 7, **characterised in that** the surface distance sensor comprises a distance sensor with a transmitter (3) emitting light beams (2) and a receiver (4) receiving light beams (2).

9. An optical sensor according to one of the claims 7 or 8, **characterised in that** the surface distance sensor has a measuring head (6) rotating about an axis of rotation (D), in which the distance sensor is arranged to rotate with it, so that the light beams (2) emitted by the transmitter (3) of the distance sensor are periodically guided within the detection range by the rotary movement of the measuring head (6).

10. An optical sensor according to one of the claims 7 or 8, **characterised in that** the distance sensor is arranged in a stationary manner in the surface distance sensor, and **in that** a deflection unit (11) executing a deflection movement is associated with the distance sensor, wherein the light beams (2) emitted by the transmitter (3) of the distance sensor are means of the deflection unit (11) and are thereby periodically guided within the detection range.

11. An optical sensor according to any one of claims 6 to 10, **characterised in that** it is a safety sensor.

## Revendications

1. Procédé de détection d'objets (9) dans une zone de détection au moyen d'un capteur optique (1) avec une unité de capteur générant des signaux de capteur et avec une unité d'extension (5) dans laquelle les signaux de capteur sont évalués, dans lequel un champ de protection rectangulaire (15) situé à l'intérieur de la zone de détection est prédéfini dans l'unité d'évaluation (5), un champ de protection rectangulaire (15) délimité par une limite de champ de protection (15a) est prédéfini dans l'unité d'évaluation (5), et un signal de détection d'objet étant généré dans l'unité d'évaluation (5) si une intrusion d'un objet non autorisé dans le champ de protection (15) est enregistrée sur la base des signaux de capteur, **caractérisé en ce que**, si l'intrusion d'un objet non autorisé dans le champ de protection (15) est détectée, le signal de détection d'objet est généré dans l'unité d'évaluation (5), **en ce que**, lorsque la pénétration d'une structure d'objet admissible par une partie de la limite du champ de protection (15a) dans le champ de protection (15) est détectée au moyen de l'unité de détection dans l'unité d'évaluation (5), cette partie de la limite du champ de protection (15a) est remplacée par le contour de la structure d'objet admissible et, en même temps, la limite restante du champ de protection est suivie et modifiée par calcul de cette manière, **en ce que** l'on obtient un nouveau champ de protection (150) qui est à nouveau rectangulaire et qui couvre toute une trajectoire (20) d'une unité mobile, et **en ce que** le capteur optique est prévu sur l'unité mobile, et **en ce que** les structures d'objet autorisées sont formées par des contours d'environnement stationnaires.

2. Procédé selon la revendication 1, **caractérisé en ce que** l'adaptation de la limite du champ de protection (15a) par le contour de la structure de l'objet admissible est réalisée en continu en fonction de sa position par rapport au capteur optique (1).

3. Procédé selon l'une des revendications 1 ou 2, **caractérisé en ce que** la vitesse de l'objet par rapport au capteur optique (1) est déterminée par une mesure de distance résolue dans le temps par rapport à la structure d'objet admissible.

4. Procédé selon la revendication 3, **caractérisé en ce que** la vitesse déterminée est comparée à une valeur limite dans l'unité d'évaluation (5), et **en ce qu'**une mesure de sécurité est déclenchée si la valeur limite est dépassée dans l'unité d'évaluation (5).

5. Procédé selon l'une quelconque des revendications 1 à 4, **caractérisé en ce que** la ou chaque structure d'objet admissible est enseignée dans un processus d'apprentissage.

6. Capteur optique pour la détection d'objets (9) dans une zone de détection, avec une unité de capteur générant des signaux de capteur et avec une unité d'évaluation (5) pour l'évaluation des signaux de capteur, un champ de protection rectangulaire (15) se trouvant à l'intérieur de la zone de détection et délimité par une limite de champ de protection (15a) étant prédéfini dans l'unité d'évaluation (5), et un signal de détection d'objet étant généré dans l'unité d'évaluation (5) lorsque la pénétration d'un objet non autorisé dans le champ de protection (15) est enregistrée à l'aide des signaux de capteur, **caractérisé en ce que**, lorsque la pénétration d'une structure d'objet admissible sur une partie de la limite du champ de protection (15a) dans le champ de protection (15) est détectée au moyen de l'unité de détection dans l'unité d'évaluation (5), cette partie de la limite du champ de protection (15a) est remplacée par le contour de la structure d'objet admissible et, en même temps, la limite restante du champ de protection est suivie et modifiée par calcul de cette manière, **en ce que** l'on obtient un nouveau champ de protection (150) qui est à nouveau rectangulaire et qui couvre toute une trajectoire (20) d'une unité mobile, et **en ce que** le capteur optique est prévu sur l'unité mobile, et **en ce que** les structures d'objets autorisées sont formées par des contours ambiants fixes.

7. Capteur optique selon la revendication 6, **caractérisé en ce qu'**il s'agit d'un capteur de distance surfacique au moyen duquel les objets (9) sont détectés dans une zone de détection plane.

8. Capteur optique selon la revendication 7, **caractérisé en ce que** le capteur de distance de surface comprend un capteur de distance avec un émetteur (3) émettant des faisceaux lumineux (2) et un récepteur (4) recevant les faisceaux lumineux (2).

9. Capteur optique selon l'une des revendications 7 ou 8, **caractérisé en ce que** le capteur de distance de surface présente une tête de mesure (6) tournant autour d'un axe de rotation (D), dans laquelle le capteur de distance est agencé pour tourner avec elle, de sorte que les faisceaux lumineux (2) émis par l'émetteur (3) du capteur de distance sont périodiquement guidés dans la zone de détection par le mouvement de rotation de la tête de mesure (6).

10. Détecteur optique selon l'une des revendications 7 ou 8, **caractérisé en ce que** le détecteur de distance est disposé de manière fixe dans le détecteur de distance de surface, et **en ce qu'**une unité de déviation (11) exécutant un mouvement de déviation est associée au détecteur de distance, les rayons lumineux (2) émis par l'émetteur (3) du détecteur de distance étant des moyens de l'unité de déviation (11) et étant ainsi guidés périodiquement dans la zone de détection.

11. Capteur optique selon l'une quelconque des revendications 6 à 10, **caractérisé en ce qu'**il s'agit d'un capteur de sécurité.
